# EUROPEAN PATENT APPLICATION

(11) **EP 4 779 812 A1**
(43) Date of publication of application: **22.07.2026**
(21) Application number: 26151927.6
(22) Date of filing: 14.01.2026
(51) Int. Cl.: H01R 13/422, B33Y 80/00

(54) **INTERNAL CONTACT RETENTION FEATURES FOR 3D PRINTED ELECTRICAL CONNECTOR**

(30) Priority: 17.01.2025 US 202519026766
(71) Applicant: TE Connectivity Solutions GmbH, 8200 Schaffhausen (CH)
(72) Inventor: BADARINATH, Rakshith, Middletown, 17057 (US); HEMOND, Jessica H.B., Middletown, 17057 (US); BYLER, William B, Middletown, 17057 (US); LANDON, III, Raymond Leroy, Middletown, 17057 (US); WORKMAN, Emma L, Middletown, 17057 (US); YANG, Yanzhe, Middletown, 17057 (US)
(74) Representative: Ashton, Gareth Mark

(57) **Abstract**

An electrical connector (200) includes a housing (220) having a housing body (230) being a layered structure with walls (232) forming a contact channel (222). The housing includes a contact retention feature extending from a first wall (234) of the walls into the contact channel. The contact retention feature includes a first fulcrum (290) extending from the first wall, a second fulcrum (291) extending from the first wall, and a latch arm (282) extending from at least one of the first fulcrum and the second fulcrum. The latch arm includes a retention seat (284). The electrical connector includes a contact (210) received in the contact channel. The contact includes a catch surface (216) configured to engage the retention seat to retain the contact in the contact channel.

## Description

### BACKGROUND OF THE INVENTION

The subject matter herein relates generally to electrical connectors produced by additive manufacturing or 3D printing.

Electrical connectors are used to electrically connect components to transmit data and/or power between the components. The electrical connectors may include a plug, and a receptacle connector mated at a mating interface creating a stable electrical assembly. Within a connector there is typically a metal or electrically conductive contact which transmits the electrical signal and may also provide mechanical performance. Providing both insulative and mechanical properties is a connector housing which can include specific features designed to provide functionality such as external housing latches or internal retention features designed to hold contacts within the connector. Each electrical connector holds one or more contacts in a housing which may vary in size and layout The contacts are typically held in the housing using an internal retention feature which meets both a maximum insertion force as well as a minimum retention force ensuring safe functionality of the connector. Connector housings have historically been designed for molding and thermoplastic materials such as polyamide (PA). The latches are designed to meet insertion and retention forces based on the polymer material selected for molding.

Conventional connector housings are not without disadvantages. For example, changes in housing designs are difficult and expensive due to the need for customized tooling for molding of the new parts. Customization allowing for greater variety of size of contacts or spacing of said contacts is difficult due to the added cost and time to produce such housings. There is a need for faster design turnaround and faster product realization. Additive manufacturing processes, such as 3D Printing, enables more design freedom as well as faster production cycle. Vat Polymerization (VP) technology such as Digital Light Processing (DLP) or Stereolithography (SLA) is a common choice to produce high performing, high resolution parts. However, materials used in these manufacturing processes, photopolymers such as but not limited to polyacrylate (PAK), do not have the same performance as conventional materials. There is a need for latch design capable of meeting performance requirements and produced by 3D printing.

### BRIEF DESCRIPTION OF THE INVENTION

In one embodiment, an electrical connector is provided and includes a housing which includes a housing body. The housing body has a layered structure. The housing body includes walls forming a contact channel. The housing body includes a contact retention feature extending from a first wall of the walls into the contact channel. The contact retention feature includes a first fulcrum extending from the first wall, an optional second fulcrum extending from the first wall, and a latch arm extending from at least one of the first fulcrum and the second fulcrum. The latch arm includes a retention seat. The electrical connector includes a contact received in the contact channel. The contact includes a catch surface configured to engage the retention seat to retain the contact in the contact channel.

In another embodiment, an electrical connector is provided and includes a housing that includes a housing body. The housing body has a layered structure. The housing includes walls forming a contact channel. The housing includes a contact retention feature extending from a first wall of the walls into the contact channel. The contact retention feature includes a fulcrum extending from the first wall and a latch arm extending from the first fulcrum. The latch arm includes a retention seat. The housing includes a positive stop extending from the first wall into the contact channel. The positive stop is aligned with the latch arm to limit movement of the latch arm in a direction toward the first wall. The electrical connector includes a contact received in the contact channel. The contact includes a catch surface configured to engage the retention seat to retain the contact in the contact channel.

In a further embodiment, an electrical connector is provided and includes a housing that includes a housing body. The housing body has a layered structure. The housing includes walls forming a contact channel. The housing includes a contact retention feature extending from a first wall of the walls into the contact channel. The contact retention feature includes a fulcrum extending from the first wall and a latch arm extending from the first fulcrum to a tip. The latch arm includes a retention seat at the tip. The latch arm has a latch arm width. The latch includes a retention seat width at the retention seat wider than the latch arm width. The electrical connector includes a contact received in the contact channel. The contact includes a catch surface configured to engage the retention seat to retain the contact in the contact channel.

### BRIEF DESCRIPTION OF THE DRAWINGS

Figure 1 illustrates an electrical connector system in accordance with an exemplary embodiment.
Figure 2 is an exploded view of the electrical connector system or assembly in accordance with an exemplary embodiment.
Figure 3 is a cross-sectional view a portion of the electrical connector in accordance with an exemplary embodiment showing the housing.
Figure 4 is a sectional view of the electrical connector in accordance with an exemplary embodiment showing the contact partially loaded into the housing.
Figure 5 is a sectional view of a portion of the electrical connector showing the contact latch in accordance with an exemplary embodiment.
Figure 6 is a sectional view of a portion of the electrical connector showing the contact latch in accordance with an exemplary embodiment.
Figure 7 is a sectional view of a portion of the electrical connector showing the contact latch in accordance with an exemplary embodiment.
Figure 8 is a sectional view of a portion of the electrical connector showing the contact latch in accordance with an exemplary embodiment.
Figure 9 is a sectional view of a portion of the electrical connector showing the contact latch in accordance with an exemplary embodiment.
Figure 10 is a sectional view of a portion of the electrical connector showing the contact latch in accordance with an exemplary embodiment.

### DETAILED DESCRIPTION OF THE INVENTION

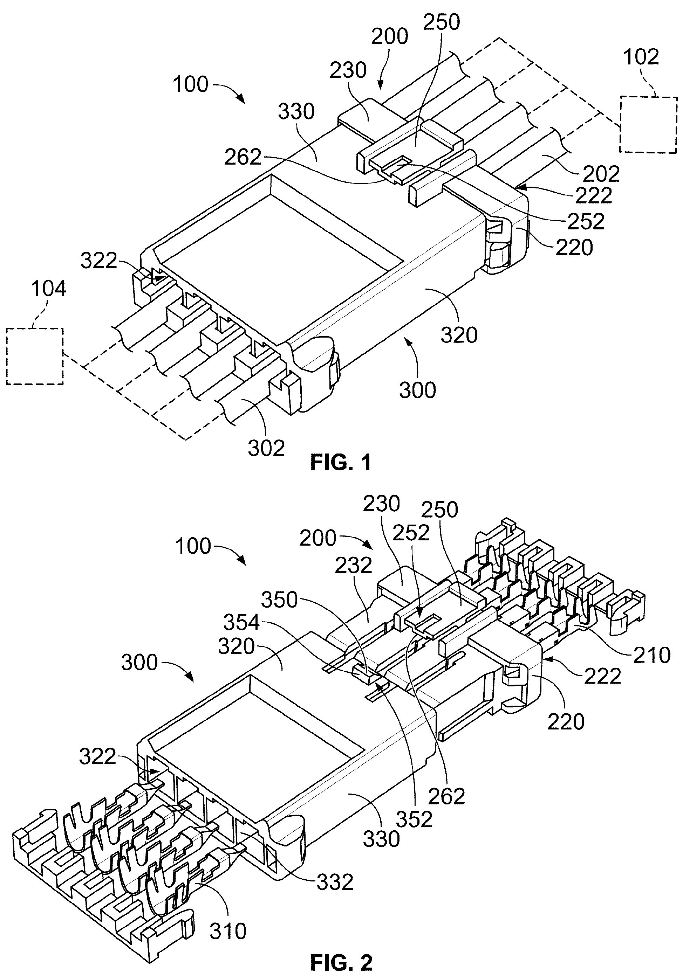

Figure 1 illustrates an electrical connector system 100 in accordance with an exemplary embodiment. Figure 2 is an exploded view of the electrical connector system 100 in accordance with an exemplary embodiment. The electrical connector system 100 includes a first electrical connector 200 electrically connected to a first component 102 and a second electrical connector 300 electrically connected to a second component 104. The electrical connectors 200, 300 are mated at a separable mating interface. The electrical connectors 200, 300 transmit data and/or power between the first and second components 102, 104.

In an exemplary embodiment, the first electrical connector 200 is a cable connector having one or more cables 202 extending from the first electrical connector 200. In alternative embodiments, the first electrical connector 200 may be a board connector terminated to a circuit board (not shown). In alternative embodiments, in lieu of the second electrical connector 300, the first electrical connector 200 may be directly mated to a circuit board. For example, the first electrical connector 200 may be a card edge connector configured to receive an edge of a circuit board.

The first electrical connector 200 includes a housing 220 holding one or more contacts 210. For example, the contacts 210 are configured to be received in contact channels 222 of the housing 220. The contacts 210 and contact channels 222 may be arranged in one or more rows and one or more columns. The contact channels 222 may vary in size, number and/or shape. The contacts 210 may be held in the contact channels 222 by contact retention features (not shown). Each contact 210 is terminated to an end of the corresponding cable 202. The contact 210 may be crimped to the end of the corresponding cable 202. Alternatively, the contact 210 may be welded or soldered to the end of the cable 202. In other alternative embodiments, the contact 210 may be configured to be terminated to a circuit board, such as being press-fit or soldered to a board contact of the circuit board.

In an exemplary embodiment, the housing 220 includes a housing body 230. The housing body 230 includes walls 232 defining the contact channels 222. In an exemplary embodiment, the housing body 230 is a unitary, monolithic structure. For example, the housing body 230 is integrally formed as a single piece from a manufacturing process. In an exemplary embodiment, the housing body 230 is formed from an additive manufacturing process. For example, the housing body 230 is manufactured from a 3D printing process. Additive manufacturing processes enable design freedom as well as faster production cycle, such as compared to conventional molding processes. Vat Polymerization (VP) technology such as Digital Light Processing (DLP) or Stereolithography (SLA) is a common choice to produce high performing, high resolution parts. The housing body 230 is manufactured from a dielectric material, such as a polyacrylate (PAK) material. The housing body 230 may be manufactured from a photopolymer material. In various embodiments, the housing body 230 is manufactured from a thermoset polymer material. In other various embodiments, the housing body 230 is manufactured from a thermoplastic polymer material. In an exemplary embodiment, the housing body 230 is a layered structure. For example, the housing body 230 includes layers formed during an additive manufacturing process, such as 3D printing, to form the various layers to form the unitary, monolithic structure. The housing body 230 may manufactured using 3D printing resulting in a layered structure with layers varying based on technology. The layered structure may have layers having a nominal thickness of approximately the 20-50µm range.

In an exemplary embodiment, the first electrical connector 200 includes a latching element 250 configured to be latchably coupled to the first electrical connector 200 to secure the first and second electrical connectors 200, 300. The latching element 250 is manufactured with the housing body 230. For example, the latching element 250 is additive manufactured, such as 3D printed, with the walls 232 of the housing body 230. In the illustrated embodiment, the latching element 250 includes a deflectable latch 252 having a latch hook262.

In an exemplary embodiment, the second electrical connector 300 is a cable connector having one or more cables 302 extending from the second electrical connector 300. In alternative embodiments, the second electrical connector 300 may be a board connector terminated to a circuit board.

The second electrical connector 300 includes a housing 320 holding one or more contacts 310. For example, the contacts 310 are configured to be received in contact channels 322 of the housing 320. The contacts 310 and contact channels 322 may be arranged in one or more rows and one or more columns. The contacts 310 may be held in the contact channels 322 by contact retention features (not shown). Each contact 310 is terminated to an end of the corresponding cable 302. The contact 310 may be crimped to the end of the corresponding cable 302. Alternatively, the contact 310 may be welded or soldered to the end of the cable 302. In other alternative embodiments, the contact 310 may be configured to be terminated to a circuit board, such as being press-fit or soldered to a board contact of the circuit board.

In an exemplary embodiment, the housing 320 includes a housing body 330. The housing body 330 includes walls 332 defining the contact channels 322. In an exemplary embodiment, the housing body 330 is a unitary, monolithic structure. For example, the housing body 330 is formed as a single piece from a manufacturing process. In an exemplary embodiment, the housing body 330 is formed from an additive manufacturing process. For example, the housing body 330 is manufactured by a 3D printing process. The housing body 330 is manufactured from a dielectric material, such as a polyacrylate (PAK) material. The housing body 330 may be manufactured from a photopolymer material. In various embodiments, the hosing body 330 is manufactured from a thermoset polymer material. In other various embodiments, the housing body 330 is manufactured from a thermoplastic polymer material. In an exemplary embodiment, the housing body 330 is a layered structure. For example, the housing body 330 includes layers formed during an additive manufacturing process, such as 3D printing, to form the various layers to form the unitary, monolithic structure.

In an exemplary embodiment, the second electrical connector 300 includes a retention feature 350, such as a latching element or catch, configured to be latchably coupled to the first electrical connector 200 to secure the first and second electrical connectors 200, 300. The latching element 350 is manufactured with the housing body 330. For example, the latching element 350 is additive manufactured, such as 3D printed, with the walls 332 of the housing body 330. In the illustrated embodiment, the latching element 350 includes a fixed latch 352 having a catch surface 354.

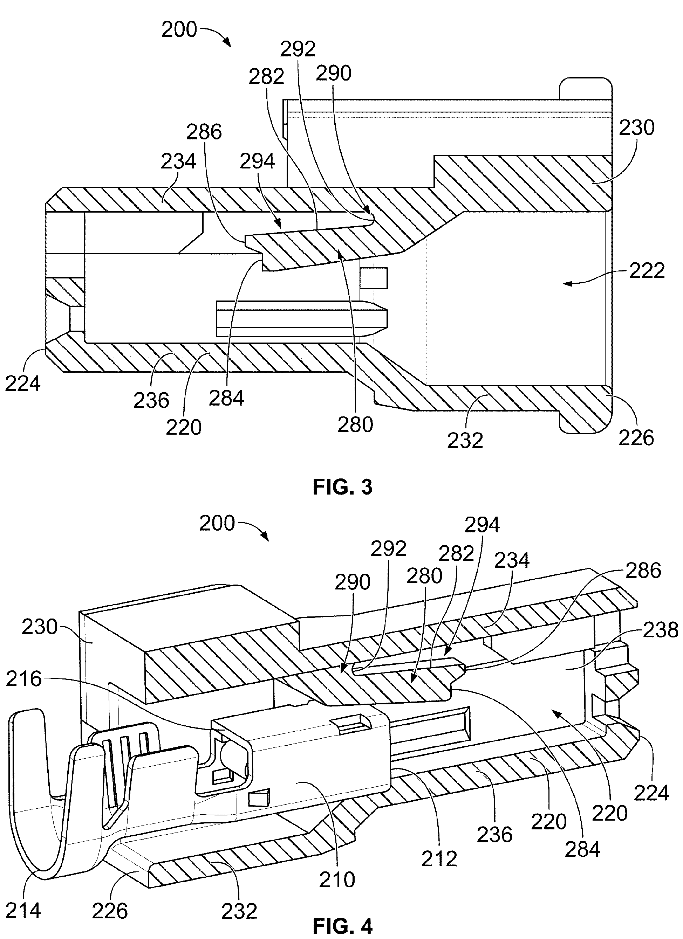

Figure 3 is a cross-sectional view of a portion of the electrical connector 200 in accordance with an exemplary embodiment showing the housing 220. Figure 4 is a sectional view of the electrical connector 200 in accordance with an exemplary embodiment showing the contact 210 partially loaded into the housing 220. Figures 3 and 4 illustrate a contact retention feature 280 of the housing 220 in accordance with an exemplary embodiment. The contact retention feature 280 is used to secure the contact 210 in the contact channel 222. The contact retention feature 280 may be a contact latch, such as a deflectable contact latch. The contact retention feature 280 is manufactured with the housing body 230. For example, the contact retention feature 280 is additive manufactured, such as 3D printed, with the walls 232 of the housing body 230.

The contact 210 (Figure 4) is an electrical contact, such as a stamped and formed contact. The contact 210 extends between a mating end 212 and a terminating end 214. The mating end 212 is configured to be mated with the contact 310 of the second electrical connector 300 (Figure 2). In the illustrated embodiment, the mating end 212 includes a socket configured to receive a pin of the contact 310. For example, the socket may be box shaped having a spring beam in the interior of the socket configured to interface with the pin. The socket may have other shapes, such as a cylindrical shape in alternative embodiments. Other types of mating ends may be used in alternative embodiments, such as a pin, a blade, a spring beam, or other type of mating end. The terminating end 214 is configured to be terminated to the cable 202. In the illustrated embodiment, the terminating end 214 includes a crimp barrel configured to be crimped to the cable 202. Other types of terminating ends may be provided in alternative embodiments, such as a weld pad or solder pad. In an exemplary embodiment, the contact 210 includes a catch surface 216 configured to interface with the contact retention feature 280 to secure the contact 210 in the contact channel 222. In the illustrated embodiment, the catch surface 216 is defined by a rear edge of the socket, such as at a top of the socket. Other types of catch surfaces may be used in alternative embodiments, such as an opening or window formed in the socket. The catch surface 216 may be located at other locations in alternative embodiments.

The housing 220 extends between a front 224 and a rear 226. In an exemplary embodiment, the front 224 defines a mating end of the electrical connector 200 configured to be mated with the mating electrical connector 300. In the illustrated embodiment, the rear 226 defines a cable end of the electrical connector 200, wherein the cables are configured to extend from the housing 220 of the cable end. In an alternative embodiment, the electrical connector 200 may be a right angle connector having the cable end oriented perpendicular to the mating end, such as at the top or the bottom. The walls 232 of the housing body 230 extend between the front 224 in the rear 226. In an exemplary embodiment, the walls 232 include a first wall 234 and a second wall 236 opposite the first wall 234. The first wall 234 may be a top wall and the second wall 236 may be a bottom wall. The walls 232 includes side walls 238 between the first and second walls 234, 236.

In an exemplary embodiment, the contact retention feature 280 extends from the first wall 234 (for example, the top wall). The contact retention feature 280 extends into the contact channel 222 to interface with the contact 210 and secure the contact 210 in the contact channel 222. In an exemplary embodiment, the contact retention feature 280 is deflectable. For example, the contact retention feature 280 may be deflected outward (for example, upward) toward the first wall 234 when the contact 210 is loaded into the contact channel and may snap back into a latching position behind the contact 210 when the contact 210 is fully loaded into the housing 220.

The contact retention feature 280 includes a latch arm 282 configured to be latchably coupled to the contact 210 at the catch surface 216. For example, the latch arm 282 includes a retention seat 284 configured to seat against the catch surface 216 when the contact 210 is fully loaded into the contact channel 222. The retention seat 284 may include a pocket or groove that receives the catch surface 216. The retention seat 284 forms a blocking surface that blocks removal (for example, in a rearward direction) of the contact 210 from the contact channel 222. In an exemplary embodiment, the retention seat 284 is located at or proximate to a distal end or tip 286 of the latch arm 282. In other embodiments, the retention seat 284 may be located at a central portion of the latch arm 282 rather than at the distal end. In an exemplary embodiment, the retention seat 284 has a large surface area for supporting and blocking removal of the contact 210. For example, the distal end or tip 286 of the latch arm 282 may be enlarged, such as being widened, to form a large area for supporting the contact 210. In various embodiments, the tip 286 and/or the retention seat 284 may be wider than other portions of the latch arm 282 .

In an exemplary embodiment, the latch arm 282 is connected to the housing 220, such as at the first wall 234, at one or more fulcrums 290. The contact retention feature 280 is fixed to the first wall 234 at the fulcrum(s) 290. The latch arm 282 is deflectable relative to the first wall 234 at the fulcrum 290. For example, the latch arm 282 may pivot or rotate at the fulcrum 290.

In an exemplary embodiment, the fulcrum 290 transitions to the first wall 234 at fillets 292. The fillets 292 define a rounded or smooth transition between the surfaces. The fillets 292 reinforce the corner where the surfaces meet. The fillets 292 may be concave junctions. In an exemplary embodiment, a pocket 294 is defined between the latch arm 282 and the first wall 234. For example, the pocket 294 may be located above the latch arm 282. The pocket 294 provides a space for deflection of the latch arm 282.

In an exemplary embodiment, the fulcrum 290 and/or the latch arm 282 may include grooves or cuts (not shown) formed therein, such as in the area of deflection or bending, to allow ease of deflection of the latch arm 282 relative to the first wall 234. The grooves or cuts may reduce stresses at the area of deflection or bending to reduce the risk of breaking or cracking at the transitions between the fulcrum 290 and the first wall 234 and/or the latch arm 282.

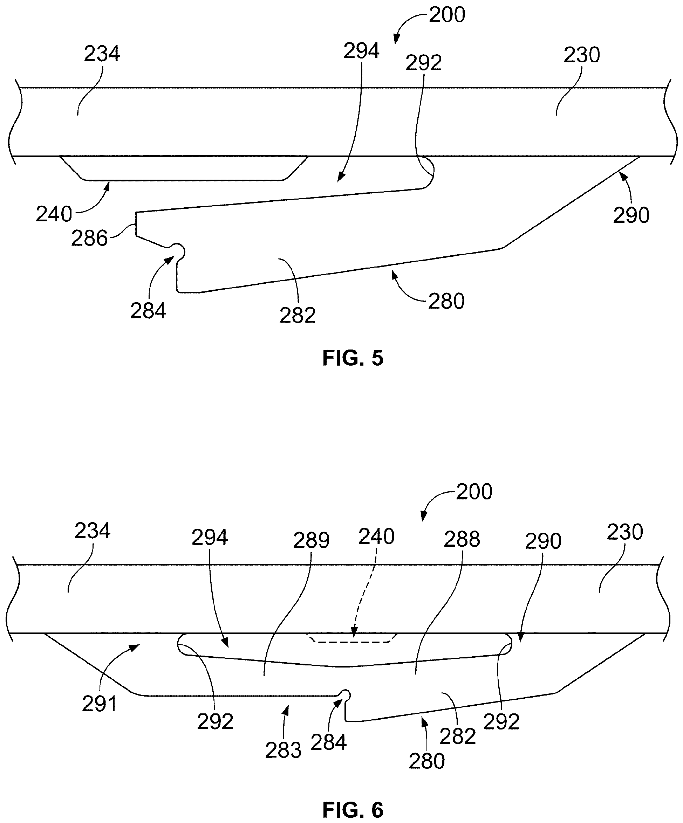

In an exemplary embodiment, a positive stop (Figure 5) may be provided in the pocket 294 to limit deflection of the latch arm 282. For example, the positive stop may extend from the first wall 234 and/or the latch arm 282 to reduce the amount of deflection and movement of the latch arm 282 in the pocket 294.

Figure 5 is a sectional view of a portion of the electrical connector 200 showing the contact retention feature 280 in accordance with an exemplary embodiment. The contact retention feature 280 is manufactured with the housing body 230. For example, the contact retention feature 280 is additive manufactured, such as 3D printed, with the first wall 234 of the housing body 230. In an exemplary embodiment, the contact retention feature 280 is a layered structure. For example, the contact retention feature 280 includes layers formed during an additive manufacturing process to form the various layers to form the unitary, monolithic structure with the housing body 230.

The contact retention feature 280 extends from the first wall 234 with the pocket 294 defined between the inner surface of the contact retention feature 280 and the first wall 234. The contact retention feature 280 includes the latch arm 282 and the retention seat 284 at the distal end 286 of the latch arm 282. The latch arm 282 is connected to the first wall 234 at the fulcrum 290 and includes the fillets 292 to transition between the fulcrum 290 and the first wall 234. The latch arm 282 may pivot or rotate at the fulcrum 290.

In an exemplary embodiment, a positive stop 240 is provided in the pocket 294. The positive stop 240 extends from the first wall 234 into the pocket 294. In an exemplary embodiment, the positive stop 240 is aligned with the distal end 286 of the latch arm 282. The positive stop 240 may be at other locations in alternative embodiments. The positive stop 240 limits deflection of the latch arm 282 beyond a predetermined limit. For example, the positive stop 240 prevents the distal end 286 from engaging the first wall 234. The distal end 286 is stopped from deflecting to the first wall 234, which limits the total amount of movement of the contact retention feature 280. The positive stop 240 reduces stresses at the area of deflection or bending of the contact retention feature 280 to reduce the risk of breaking or cracking at the fulcrum 290. In an exemplary embodiment, the positive stop 240 extends at least half a distance between the first wall 234 and the latch arm 282. For example, the positive stop 240 may have a thickness at least half the distance of retention feature displacement when contact is inserted 294. In an exemplary embodiment, the distal end 286 of the latch arm 282 may flex or bend slightly after the latch arm 282 engages the positive stop 240. For example, the latch arm 282 may initially engage the corner of the positive stop 240 and then continue to bend or flex toward the flat bottom of the positive stop 240, thus reducing stress at the fulcrum 290.

Figure 6 is a sectional view of a portion of the electrical connector 200 showing the contact retention feature 280 in accordance with an exemplary embodiment. In the illustrated embodiment, the contact retention feature 280 is a simply supported beam rather than a cantilevered beam to improve the retention force and reduce stress at the fulcrum(s) 290. The contact retention feature 280 is manufactured with the housing body 230. For example, the contact retention feature 280 is additive manufactured, such as 3D printed, with the first wall 234 of the housing body 230. In an exemplary embodiment, the contact retention feature 280 is a layered structure. For example, the contact retention feature 280 includes layers formed during an additive manufacturing process to form the various layers to form the unitary, monolithic structure with the housing body 230.

The contact retention feature 280 extends from the first wall 234 with the pocket 294 defined between the inner surface of the contact retention feature 280 and the first wall 234. In an exemplary embodiment, the latch arm 282 is connected to the first wall 234 at both ends of the latch arm 282. For example, the latch arm 282 is connected to the first wall 234 at the first fulcrum 290 (rear fulcrum) and at a second fulcrum 291 (front fulcrum). The fillets 292 transition between the fulcrums 290, 291 and the first wall 234. In an exemplary embodiment, the latch arm 282 includes a first beam 288 transitioning from the first fulcrum 290 and a second beam 289 transitioning from the second fulcrum 291. The first and second beams 288, 289 may meet at a central portion 283 of the latch arm 282.

The latch arm 282 may pivot or rotate at the fulcrums 290, 291. For example, the central portion 283 of the latch arm 282 may flex inward, causing pivoting at both of the fulcrums 290, 291. In the illustrated embodiment, the retention seat 284 is located at the central portion 283, such as approximately centered between the fulcrums 290, 291.

In various embodiments, a positive stop 240 (shown in phantom) may be provided in the pocket 294 to limit deflection of the latch arm 282. For example, the positive stop 240 may extend from the first wall 234 and/or the latch arm 282 to reduce the amount of deflection and movement of the latch arm 282 in the pocket 294, such as to reduce stresses at the area of deflection or bending of the fulcrums 290, 291 to reduce the risk of breaking or cracking at the fulcrums 290, 291.

In various embodiments, the retention seat 284 may be enlarged, such as being widened, to form a large area for supporting the contact 210. In various embodiments, the central portion 283 may be wider than other portions of the latch arm 282, such as the ends near the fulcrums 290, 291.

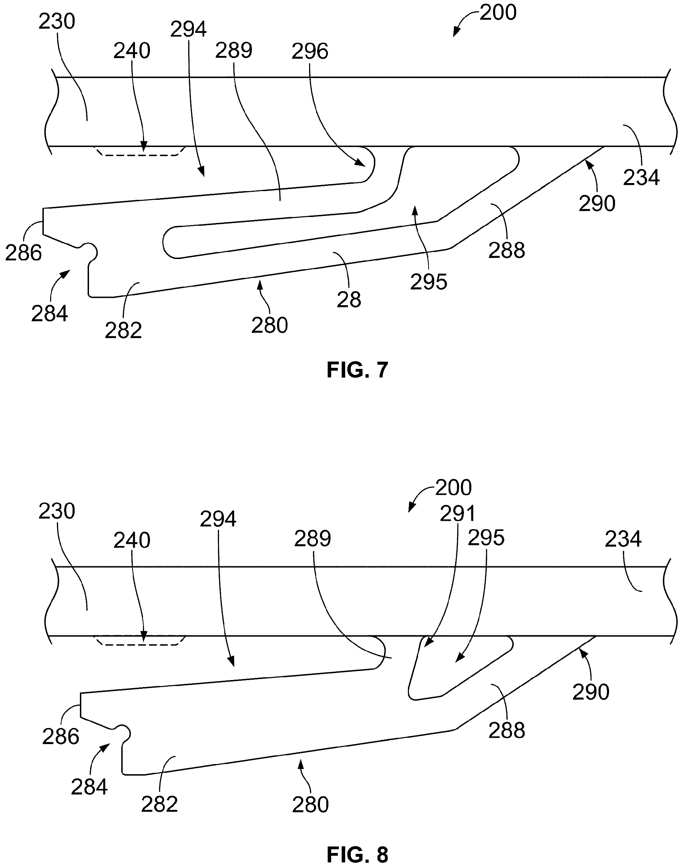

Figure 7 is a sectional view of a portion of the electrical connector 200 showing the contact retention feature 280 in accordance with an exemplary embodiment. In the illustrated embodiment, the contact retention feature 280 includes multiple fulcrums 290, 291. The contact retention feature 280 is manufactured with the housing body 230. For example, the contact retention feature 280 is additive manufactured, such as 3D printed, with the first wall 234 of the housing body 230. In an exemplary embodiment, the contact retention feature 280 is a layered structure. For example, the contact retention feature 280 includes layers formed during an additive manufacturing process to form the various layers to form the unitary, monolithic structure with the housing body 230.

The contact retention feature 280 extends from the first wall 234 with the pocket 294 defined between the inner surface of the contact retention feature 280 and the first wall 234. In an exemplary embodiment, an inner pocket 295 is located between the fulcrums 290, 291. In an exemplary embodiment, the inner pocket 295 is located between the first and second beams 288, 289 of the latch arm 282. For example, a portion of the latch arm 282 is hollow between the first and second beams 288, 289. In the illustrated embodiment, the inner pocket 295 extends forward of the fulcrums 290. 291. For example, the inner pocket 295 may extend along a majority of the length of the latch arm 282. The inner pocket 295 may extend to an area proximate to the distal end 286. In the illustrated embodiment, both of the fulcrums 290, 291 are located near the rear end of the contact retention feature 280. The latch arm 282 generally extends forward from the fulcrums 290, 291. For example, both of the first and second beams 288, 289 extend forward from the first and second fulcrums 290, 291. In the illustrated embodiment, the retention seat 284 is located forward of the fulcrums 290, 291. The retention seat 284 is located forward of the inner pocket 295.

In various embodiments, a positive stop 240 (shown in phantom) may be provided in the pocket 294 to limit deflection of the latch arm 282. For example, the positive stop 240 may extend from the first wall 234 and/or the latch arm 282 to reduce the amount of deflection and movement of the latch arm 282 in the pocket 294, such as to reduce stresses at the area of deflection or bending of the fulcrums 290, 291 to reduce the risk of breaking or cracking at the fulcrums 290, 291.

In various embodiments, the retention seat 284 may be enlarged, such as being widened, to form a large area for supporting the contact 210. In various embodiments, the front end of the latch arm 282 may be wider than other portions of the latch arm 282, such as the rear end of the latch arm 282 near the fulcrums 290, 291.

Figure 8 is a sectional view of a portion of the electrical connector 200 showing the contact retention feature 280 in accordance with an exemplary embodiment. In the illustrated embodiment, the contact retention feature 280 includes multiple fulcrums 290, 291 and the inner pocket 295 between the first and second beams 288, 289. The contact retention feature 280 is manufactured with the housing body 230. For example, the contact retention feature 280 is additive manufactured, such as 3D printed, with the first wall 234 of the housing body 230. In an exemplary embodiment, the contact retention feature 280 is a layered structure. For example, the contact retention feature 280 includes layers formed during an additive manufacturing process to form the various layers to form the unitary, monolithic structure with the housing body 230.

The contact retention feature 280 extends from the first wall 234 with the pocket 294 defined between the inner surface of the contact retention feature 280 and the first wall 234. In the illustrated embodiment, the inner pocket 295 is located between the fulcrums 290, 291. In the illustrated embodiment, the front fulcrum 291 is located forward of the inner pocket 295 and the rear fulcrum 290 is located rearward of the inner pocket 295.

In various embodiments, a positive stop 240 (shown in phantom) may be provided in the pocket 294 to limit deflection of the latch arm 282. For example, the positive stop 240 may extend from the first wall 234 and/or the latch arm 282 to reduce the amount of deflection and movement of the latch arm 282 in the pocket 294, such as to reduce stresses at the area of deflection or bending of the fulcrums 290, 291 to reduce the risk of breaking or cracking at the fulcrums 290, 291.

In various embodiments, the retention seat 284 may be enlarged, such as being widened, to form a large area for supporting the contact 210. In various embodiments, the front end of the latch arm 282 may be wider than other portions of the latch arm 282, such as the rear end of the latch arm 282 near the fulcrums 290, 291.

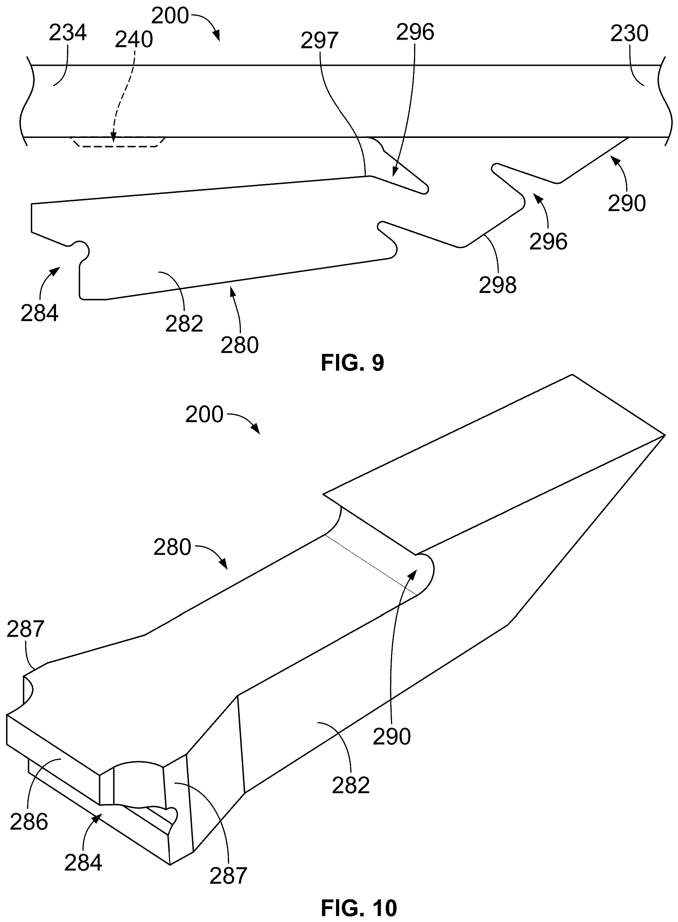

Figure 9 is a sectional view of a portion of the electrical connector 200 showing the contact retention feature 280 in accordance with an exemplary embodiment. The contact retention feature 280 is manufactured with the housing body 230. For example, the contact retention feature 280 is additive manufactured, such as 3D printed, with the first wall 234 of the housing body 230. In an exemplary embodiment, the contact retention feature 280 is a layered structure. For example, the contact retention feature 280 includes layers formed during an additive manufacturing process to form the various layers to form the unitary, monolithic structure with the housing body 230.

The contact retention feature 280 extends from the first wall 234 with the pocket 294 defined between the inner surface of the contact retention feature 280 and the first wall 234. In an exemplary embodiment, the latch arm 282 includes transverse grooves 296. The transverse grooves 296 extend width-wise across the latch arm 282. The transverse grooves 296 make the latch arm 282 flexible, reducing stress at the area of deflection or bending of the fulcrum 290 to reduce the risk of breaking or cracking at the fulcrum 290. In the illustrated embodiment, the transverse grooves 296 are located at the rear end of the latch arm 282, such as proximate to and/or along the fulcrum 290. In an exemplary embodiment, the transverse grooves 296 are provided along an upper surface 297 and/or a lower surface 298 of the latch arm 282. The transverse grooves 296 may be tapered, such as being wider at the outer portion and narrower at the inner portion of the transverse groove 296.

In various embodiments, a positive stop 240 (shown in phantom) may be provided in the pocket 294 to limit deflection of the latch arm 282. For example, the positive stop 240 may extend from the first wall 234 and/or the latch arm 282 to reduce the amount of deflection and movement of the latch arm 282 in the pocket 294, such as to reduce stresses at the area of deflection or bending of the fulcrums 290, 291 to reduce the risk of breaking or cracking at the fulcrums 290, 291.

In various embodiments, the retention seat 284 may be enlarged, such as being widened, to form a large area for supporting the contact 210. In various embodiments, the front end of the latch arm 282 may be wider than other portions of the latch arm 282, such as the rear end of the latch arm 282 near the fulcrum 290.

Figure 10 is a sectional view of a portion of the electrical connector 200 showing the contact retention feature 280 in accordance with an exemplary embodiment. The contact retention feature 280 is manufactured with the housing body 230. For example, the contact retention feature 280 is additive manufactured, such as 3D printed, with the first wall 234 of the housing body 230. In an exemplary embodiment, the contact retention feature 280 is a layered structure. For example, the contact retention feature 280 includes layers formed during an additive manufacturing process to form the various layers to form the unitary, monolithic structure with the housing body 230.

The contact retention feature 280 includes the latch arm 282 extending from the fulcrum 290 to the distal end 286. The retention seat 284 is provided at the distal end 286. In an exemplary embodiment, the distal end 286 is widened to enlarge the retention seat 284 and increase the surface area of the retention seat 284 for supporting the contact 210. For example, the latch arm 282 may include flared sides 287 at the distal end 286 to widen the latch arm 282 at the distal end 286. The flared sides 287 may be angled outward relative to the rearward portion of the latch arm 282. As such, the front end of the latch arm 282 is wider than other portions of the latch arm 282, such as the rear end of the latch arm 282 near the fulcrum 290. Any of the contact retention features 280 shown in Figures 3-9 may include the flared sides 287 to widen the latch arm 282 at the retention seat 284. The widened area of the retention seat 284 provides more surface area to interface with the contact 210 and thus reduces the risk of breakage or cracking at the retention seat 284.

## Claims

1. An electrical connector (200) comprising:
a housing (220) including a housing body (230), the housing body having a layered structure, the housing (220) including walls (232) forming a contact channel (222), the housing (220) including a contact retention feature (280) extending from a first wall (234) of the walls into the contact channel (222), the contact retention feature (280) including a first fulcrum (290) extending from the first wall (232) and a latch arm (282) extending from the first fulcrum (290) and including a retention seat (284); and
a contact (210) received in the contact channel (222), the contact (210) including a catch surface (216) configured to engage the retention seat (284) to retain the contact (210) in the contact channel (222).

2. The electrical connector of claim 1, wherein the contact retention feature (280) comprises a second fulcrum (291) extending from the first wall (232) and wherein the latch arm (282) extends from the second fulcrum (291).

3. The electrical connector of claim 2, wherein the contact retention feature (284) includes a pocket (294) between the first and second fulcrums (290, 291) and located between the latch arm (282) and the first wall (234).

4. The electrical connector of claim 1, 2 or 3, wherein the latch arm (282) extends between a first end and a second end, the first fulcrum (290) located at the first end.

5. The electrical connector of claim 4 when appended to any one of claims 2 and 3, wherein the second fulcrum (291) is located at the second end.

6. The electrical connector of any preceding claim, wherein the housing (220) includes a positive stop (240) extending from the first wall (234) into the contact channel (222), the positive stop (240) aligned with the latch arm (282) to limit movement of the latch arm in a direction toward the first wall (234), wherein the positive stop (240) optionally extends at least half a distance between the first wall (234) and the latch arm (282).

7. The electrical connector of any preceding claim, wherein the retention seat (284) is located at a tip (286) of the latch arm (282).

8. The electrical connector of claim 2 or any claim dependent thereon, wherein the retention seat (284) is located at a central portion (283) of the latch arm between the first fulcrum (290) and the second fulcrum (291).

9. The electrical connector of claim 2 or any claim dependent thereon, wherein the latch arm (282) is a simply supported beam supported at the first and second fulcrums (290, 291), the latch arm (282) being deflectable between the first and second fulcrums (290, 291).

10. The electrical connector of claim 2 or any claim dependent thereon, wherein the latch arm (282) includes a first beam (288) extending from the first fulcrum (290) and a second beam (289) extending from the second fulcrum (291), the latch arm (282) including a pocket (295) between the first and second beams.

11. The electrical connector of any preceding claim, wherein the latch arm (282) has a latch arm width, the catch surface (216) of the contact (210) having a catch surface width wider than the latch arm width.

12. The electrical connector of any preceding claim, wherein the latch arm (282) includes transverse grooves (296).

13. The electrical connector of claim 12, wherein the latch arm (282) includes an upper surface (297) and a lower surface (298), the transverse grooves (296) being formed in the upper surface (297) and the lower surface (298).

14. The electrical connector of any preceding claim, wherein the latch arm (282) has a latch arm width and the latch includes a retention seat width at the retention seat (284) that is wider than the latch arm width.

15. The electrical connector of any preceding claim, wherein the housing body (230) is a unitary and monolithic structure comprising the contact retention feature (280).
